# EUROPÄISCHE PATENTSCHRIFT

(11) **EP 1 062 114 B1**
(45) Veröffentlichungstag und Bekanntmachung des Hinweises auf die Patenterteilung: **08.06.2005**
(21) Anmeldenummer: 99913248.3
(22) Anmeldetag: 10.03.1999
(51) Int. Cl.: B60L 7/18, B60L 7/26, B60T 13/66, B60T 13/74

(54) **VERFAHREN UND VORRICHTUNG ZUM STATISCHEN ODER DYNAMISCHEN ERMITTELN VON SOLLWERTEN FÜR BREMSKRÄFTE ODER BREMSMOMENTE**
METHOD AND DEVICE FOR STATICALLY OR DYNAMICALLY DETERMINING SET VALUES CONCERNING BRAKING FORCES OR BRAKING TORQUE
PROCEDE ET DISPOSITIF POUR LA DETERMINATION STATIQUE OU DYNAMIQUE DE VALEURS DE CONSIGNE RELATIVES A DES FORCES DE FREINAGE OU A DES COUPLES DE FREINAGE

(30) Priorität: 12.03.1998 DE 19810656
(43) Veröffentlichungstag der Anmeldung: 27.12.2000
(73) Patentinhaber: Continental Teves AG & Co. OHG, 60488 Frankfurt am Main (DE)
(72) Erfinder: BÖHM, Jürgen, D-65558 Oberneisen (DE); BERTHOLD, Thomas, D-64293 Darmstadt (DE)
(86) Internationale Anmeldenummer: PCT/EP1999/001542
(87) Internationale Veröffentlichungsnummer: WO 1999/046139

(56) Entgegenhaltungen:
- EP-A- 0 626 287
- DE-A- 4 124 496
- DE-C- 19 607 823

## Beschreibung

Die Erfindung betrifft ein Verfahren und eine Vorrichtung zum statischen und/oder dynamischen Ermitteln von Sollwerten für Bremskräfte oder Bremsmomente gemäß den Oberbegriffen der unabhängigen Ansprüche. Ein solches Verfahren und eine solche Vorrichtung sind aus der DE 41 24 496 A1 bekannt.

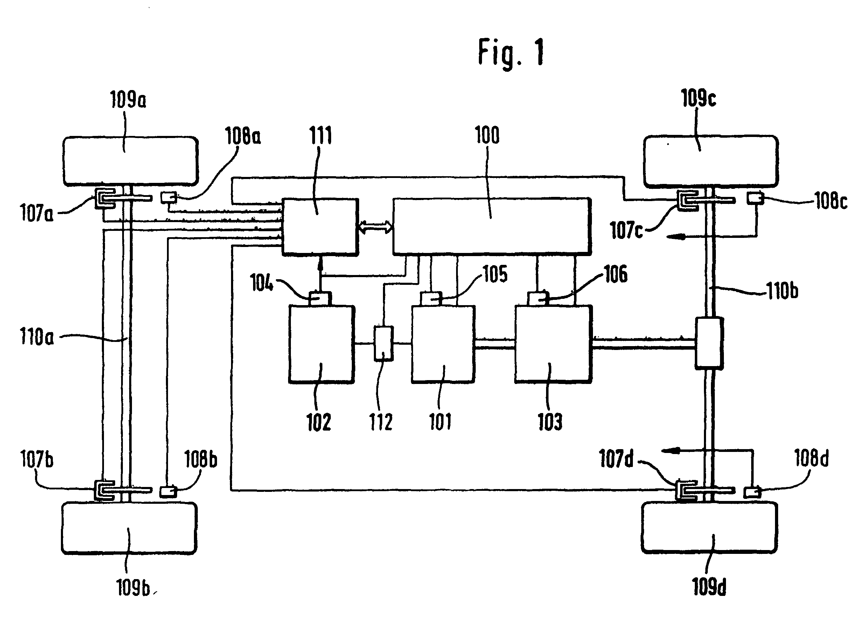

Die Erfindung findet Anwendung in Fahrzeugen, die vollständig oder zumindest teilweise durch einen Elektroantrieb angetrieben werden. Schematisch ist ein solches Fahrzeug in Fig. 1 gezeigt. Ein elektrischer Antrieb, beispielsweise ein Elektromotor 101, kann über ein Getriebe 103 auf eine Fahrzeugachse 110b, vorzugsweise die Vorderachse, einwirken und deren Räder 109c, 109d antreiben. Der Motor empfängt seine Energie aus einer Batterie 102, wobei ein Schaltblock 112 zwischengeschaltet ist, der die Energiezufuhr nach Maßgabe einer Steuerung 100 schalten kann. Der Schaltblock 112 kann vergleichsweise einfache Schalter, beispielsweise Relais, aufweisen, oder komplexere, beispielsweise Thyristoren.

Da Elektromotoren grundsätzlich auch als Generatoren betrieben werden können, wurden schon früher für elektrisch angetriebene Fahrzeuge elektrisch-regenerative Bremsen vorgeschlagen. Bei ihnen wird der Motor nicht mehr als Antriebsquelle, sondern als Generator verwendet, der durch die schiebende Fahrzeugmasse über die Räder und den Antriebsstrang angetrieben wird und dadurch die Batterie 102 lädt.

Aus verschiedenen Gründen ist eine solche Bremsanlage alleine jedoch nicht ausreichend leistungsfähig: Der eingesetzte Elektromotor weist oftmals nicht genügend Leistung auf, um als Generator die geforderte Bremskraft aufbringen zu können. Ferner wird, insbesondere bei Asychron-Antrieben, oftmals kein Schaltgetriebe eingesetzt, so da8 bei hohen Geschwindigkeiten, d.h. bei hohen Drehzahlen, nicht genügend Bremskraft vorhanden ist. Über den Zusammenhang P = M · ω ist der Zusammenhang zwischen Motorleistung P, Motormoment M und Motordrehzahl ω gegeben. Wenn die Leistung P als mehr oder minder konstant angesehen wird, ergibt sich, da8 bei hoher Drehzahl das verfügbare Antriebsmoment und demnach auch das verfügbare Bremsmoment gering ist. Somit ist in hohen Drehzahlbereichen eine elektrisch-regenerative Bremse sehr oft nicht ausreichend kräftig, um tatsächlichen oder auch gesetzlichen Erfordernissen gerecht zu werden. Das Gleiche gilt auch bei mittleren Drehzahlbereichen, wenn hohe Verzögerungen erforderlich sind. Auch dann kann trotz der geringeren Drehzahl die elektrisch-regenerative Bremse manchmal kein ausreichend hohes Bremsmoment zur Verfügung stellen. Ein weiterer Grund fhr die nicht ausreichende Leistungsfähigkeit einer regenerativen Bremsanlage besteht in der begrenzten Ladefähigkeit der Batterie. Zum Beispiel bei dem Betriebszustand, in dem die Batterie gerade voll geladen ist, darf, wenn keine zusätzlichen elektrischen Verbraucher vorgesehen sind, kein Bremsmoment vom Elektromotor als Generator aufgebracht werden. Ein Überladen der Batterie kann diese zerstören.

Somit wurde schon früher vorgeschlagen, die Bremsanlage eines auch elektrisch angetriebenen Fahrzeugs durch eine mehr oder minder herkömmliche Bremsanlage zu ergänzen. So wird beispielsweise in der eingangs genannten DE 41 24 496 A1 die Kombination aus einer elektrisch-regenerativen Bremse und einer herkömmlichen Reibbremse betrachtet. Hierbei wird die Reibbremse dazu verwendet, das gegebenenfalls fehlende Bremsmoment zu liefern, wobei jedoch auf eine Maximierung des durch die elektrisch-regenerative Bremse erzeugten Bremsmoments abgestellt wurde, um die Menge der wiedergewonnenen elektrischen Energie möglichst hoch zu halten. Bei diesem System sind jedoch Erfordernisse hinsichtlich der Bremskraftverteilung zwischen Vorderachse und Hinterachse eines Fahrzeugs nur unzureichend berücksichtigt. Insbesondere bei starken Bremsungen ist es erforderlich, daß die Bremskräfte so auf die Fahrzeugachsen verteilt werden, daß eine möglichst optimale Bremsung erfolgt.

Darüber hinaus haben jenseits der statisch gewonnenen Sollwerte eine elektrisch-regenerative Bremse einerseits und andererseits eine herkömmliche Bremse, beispielsweise eine hydraulische Bremse, unterschiedliche dynamische Ansprechverhalten. Wenn das Zusammenwirken der beiden Bremsen optimiert werden soll, ist die unterschiedliche Dynamik der beiden Bremsen auszugleichen.

Aufgabe der Erfindung ist es, ein Verfahren und eine Vorrichtung zum Ermitteln von Sollwerten für Bremskräfte anzugeben, die zu gut angepaßten Bremsungen führen.

Eine weitere Aufgabe der Erfindung ist es, ein Verfahren und eine Vorrichtung zum Ermitteln von Sollwerten für Bremskräfte oder -momente anzugeben, die dynamische Gegebenheiten der Bremssysteme berücksichtigen.

Diese Aufgaben werden mit den Merkmalen der unabhängigen Ansprüche gelöst. Abhängige Ansprüche sind auf bevorzugte Ausführungsformen der Erfindung gerichtet.

Bevor nachfolgend die Erfindung beschrieben wird, werden eingangs die Begriffe erläutert, wie sie in dieser Anmeldung verwendet werden. Sofern lediglich von "Sollwerten" gesprochen wird, sind Sollwerte für Bremskräfte oder Bremsmomente angesprochen. Tendenziell bedeuten damit hohe Sollwerte eine kräftige Bremsung, während niedrige Sollwerte eine schwache Bremsung bedeuten. Nachfolgend werden im übrigen lediglich Bremsmomente angesprochen. Bremskräfte sind hierzu äquivalent.

Die Erfindung bezieht sich auf ein Fahrzeug, in dem einerseits eine elektrisch-regenerative Bremse und andererseits eine Reibbremse vorhanden sind. Die Reibbremse wirkt an allen Rädern eines Fahrzeugs, während die elektrisch-regenerative Bremse auf zumindest eine Achse des Fahrzeugs einwirkt. Wenn ein Elektrofahrzeug beispielsweise einen Vorderachsantrieb hat, kann die elektrisch-regenerative Bremse auch nur auf die Vorderachse einwirken. Die elektrisch-regenerative Bremse wirkt entsprechend dem weiter oben genannten Mechanismus, wonach der antreibende Elektromotor "umgekehrt" als Generator zum Laden der Batterie verwendet wird. Das dann für seinen Antrieb benötigte Moment wird ihm aus dem bei der Bremsung/Verzögerung schiebenden Fahrzeug über den Antriebsstrang (Räder, Achse, Getriebe) zugeführt. Demnach kann die elektrisch-regenerative Bremse nur an derjenigen Achse, vorzugsweise der Vorderachse 110b, wirken, die auch vom elektrischen Antrieb, z.B. dem Elektromotor 101, angetrieben wird. Bei vergleichsweise schwachen Bremsungen ist dies hinnehmbar, da das über eine Achse allein aufgebrachte Bremsmoment zur Abbremsung ausreicht. Es ist sogar erwünscht, weil dann die Wiedergewinnung elektrischer Energie möglichst groß gehalten werden kann, insbesondere im Hinblick auf die Tatsache, daß vergleichsweise schwache Bremsungen deutlich über 70 % aller vorgenommenen Bremsungen ausmachen. Somit kann bei schwachen Bremsungen ein Konzept dahingehend verfolgt werden, daß die Bremsung durch die elektrisch-regenerative Bremse maximiert wird und diese Bremse dementsprechend maximale Sollwerte entsprechend dem Bremswunsch zugeführt bekommt.

Bei starken Bremsungen sind aber verschiedene Bedingungen zu berücksichtigen: Das Bremsmoment ist über beide Achsen aufzubringen, da dann der Reibwert an allen Rädern des Fahrzeugs zur Fahrzeugverzögerung genutzt werden kann. Somit kann man eine optimale Ausnutzung des Reibwerts an beiden Achsen erreicht werden.

Zum anderen kann es notwendig sein, das Kriterium der Maximierung der Sollwerte für die elektrisch-regenerative Bremse zu verlassen, beispielsweise wenn dies zu einer zu starken Bremsung der betrachteten Räder führen würde. Andererseits ist es möglich, daß das technisch mögliche maximale Bremsmoment für die elektrisch-regenerative Bremse nicht ausreicht, um das für die jeweilige Achse vorgesehene Soll zu erreichen. Dann ist der fehlende Betrag durch die Reibbremse bzw. deren Sollwerte zu ersetzen.

Somit wird die Strategie der Maximierung der Bremsleistung der elektrisch-regenerativen Bremse mit einer Strategie zur Optimierung des Bremsverhaltens durch eine Verteilung der Bremskräfte auf die verschiedenen Fahrzeugachsen kombiniert. Welche dieser Strategien zu befolgen ist, wird nach Maßgabe des Verzögerungswunsches beurteilt, beispielsweise anhand einer aus dem Verzögerungswunsch ermittelten Soll-Fahrzeugverzögerung. In einem ersten Bereich der Soll-Fahrzeugverzögerung mit vergleichsweise niedrigen Werten kann die Strategie der Maximierung der Bremsleistung der elektrisch-regenerativen Bremse befolgt werden, was häufig einer ausschließlichen Nutzung der elektrisch-regenerativen Bremse entspricht, während in einem zweiten Bereich der Soll-Fahrzeugverzögerung mit höheren Verzögerungswerten die Strategie der Bremskraftverteilung auf die Fahrzeugachsen befolgt wird.

Die Abgrenzung zwischen den zwei Bereichen kann veränderlich sein, wobei die Veränderung nach Maßgabe interner oder externer Betriebsbedingungen vorgenommen werden kann.

Der die Wahl der jeweiligen Bremsstrategie beeinflussende Verzögerungswunsch kann der Fahrerwunsch sein, wie er beispielsweise über das Bremspedal eingegeben wird. Genauso können aber auch regelungstechnisch erzeugte Verzögerungswünsche verarbeitet werden, beispielsweise aus einer Fahrzeugfolgeregelung oder ähnliches.

Der Verzögerungswunsch kann zum einen eine Soll-Fahrzeugverzögerung (Dimension m/s², negative Beschleunigung) umfassen. Wird der Verzögerungswunsch aus dem Bremspedal hergeleitet, entspräche dieser Wert in erster Näherung der Position des Bremspedals. Daneben kann aber auch die Dynamik - die zeitliche Veränderung - des Verzögerungswunsches (Dimension m/s³) betrachtet werden. Wird der Verzögerungswunsch aus dem Bremspedal hergeleitet, entspräche dies in erster Näherung der Betätigungsgeschwindigkeit des Bremspedals. Die Dynamik des Verzögerungswunsches kann zu erkennen geben, ob eine sanfte, "normale", Bremsung oder eine plötzliche, "außergewöhnliche", Panikbremsung vorzunehmen ist. Somit kann beispielsweise nach Maßgabe der Dynamik des Verzögerungswunsches die oben genannte Bereichsabgrenzung zugunsten der Bremsstrategie zur Verteilung der Bremsmomente auf die Fahrzeugachsen verschoben werden, selbst wenn die Soll-Fahrzeugverzögerung noch vergleichsweise kleine Werte hat.

Die Reibbremse ist vorzugsweise eine hydraulisch betätigte Bremse, die individuell auf alle Räder des Fahrzeugs einwirken kann. Insbesondere vorteilhaft ist ein "brake-by-wire"-System, bei dem die Bremsdrücke - und dementsprechend die Bremsmomente - an den einzelnen Rädern zwar hydraulisch, aber individuell nach Maßgabe elektrischer Signale aus einer Steuerung bzw. Regelung aufgebaut werden. Mit einem solchen System können radweise bzw. achsweise unterschiedliche Bremsmomente für die Reibbremse in einfacher Weise aufgebaut werden. Die "brake-by-wire" Anlage kann auch elektromechanisch ausgeführt sein.

Es hat sich außerdem herausgestellt, daß die Reibbremse einerseits und die elektrisch-regenerative Bremse andererseits unterschiedliche dynamische Verhalten haben. Insbesondere ist das Ansprechverhalten der elektrisch-regenerativen Bremse oft langsamer als das der Reibbremse. Dies läßt sich auf vergleichsweise lange Übertragungsstrecken einerseits im Antriebsstrang, aber andererseits und insbesondere auch auf die zugrundeliegende Regelung zurückführen. Da bei praktischen Ausführungsformen der beschriebenen kombinierten Systeme (kombiniert aus Reibbremse und elektrisch-regenerativer Bremse) zum einen eine Reibbremsenregelung, zum anderen aber auch eine Regelung für die elektrisch-regenerative Bremse notwendig ist, können sich schon in der Signalverarbeitung Totzeiten ergeben, die zu einem langsameren Ansprechen der elektrisch-regenerativen Bremse führen. Genauso kann aber auch das Umschalten des Motors zwischen antreibendem und bremsendem Betrieb zu Totzeiten führen, da insbesondere die Zeitkonstanten von Motorinduktivitäten kein beliebig schnelles Umschalten zulassen. Somit kommt häufig die elektrisch-regenerative Bremse dem ihr vorgegebenen Sollwert langsamer nach als die Reibbremse.

Deshalb wird vorgeschlagen, zumindest einen (nach statischen Kriterien erzeugten) Sollwert für die Reibbremse nach Maßgabe des dynamischen Verhaltens der elektrisch-regenerativen Bremse zu modifizieren. Insbesondere kann derjenige Sollwert der Reibbremse modifiziert werden, der für diejenige Fahrzeugachse vorgesehen ist, an der die elektrisch-regenerative Bremse wirkt. Die Modifikation bzw. Korrektur kann beispielsweise durch einen regelungstechnischen Ansatz oder durch Anwendung einer Simulation erfolgen.

Nachfolgend werden, bezugnehmend auf die Zeichnung, einzelne Ausführungsformen der Erfindung beschrieben. Es zeigen:
- Fig. 1: schematisch den Aufbau eines Fahrzeugs, in dem die Erfindung angewendet werden kann,
- Fig. 2: eine erste erfindungsgemäße Ausführungsform zur Ermittlung von Sollwerten für Bremsmomente,
- Fig. 3: eine Variante der Ausführungsform nach Fig. 2,
- Fig. 4: ein Diagramm, anhand dessen die Bremskraftverteilung beschrieben wird, und
- Fig. 5A,B: eine dynamische Sollwertermittlung.

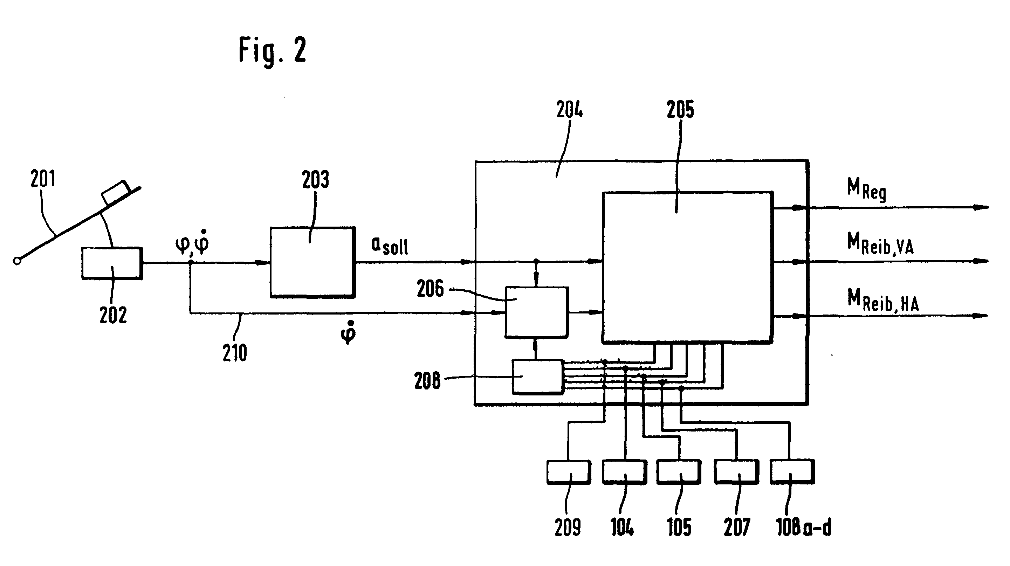

Bevor anhand von Fig. 2 eine erste Ausführungsform beschrieben wird, wird anhand von Fig. 1 ein Fahrzeug erläutert, in dem die Erfindung angewendet werden kann.

Fig. 1 zeigt schematisch in Draufsicht ein Fahrzeug, bei dem rechts die Vorderachse 110b und links die Hinterachse 110a gezeigt ist. Den vier Rädern 109a - 109d sind jeweils Radsensoren 108a - 108d sowie Reibbremsen 107a - 107d zugeordnet. Vorzugsweise handelt es sich bei der Reibbremsanlage um ein "brake-by-wire"-System, bei dem die Bremsdrücke und dementsprechend die Bremsmomente an den einzelnen Rädern nach Maßgabe elektrischer Signale erzeugt werden, wobei die elektrischen Signale vorzugsweise achsindividuell und besonders bevorzugt radindividuell durch eine Steuerung/Regelung 111 erzeugt und den einzelnen Reibbremsen 107a - 107d an den einzelnen Rädern zugeführt werden. Angetrieben wird das Fahrzeug durch einen elektrischen Antrieb 101, vorzugsweise einen Elektromotor, der seine Energie aus einer Batterie 102 empfängt. Zwischen Batterie 102 und Motor 101 ist eine Schalteinheit 112 geschaltet, die den Energiefluß zwischen Batterie 102 und Motor 101 nach Maßgabe von Befehlen aus einer Steuerung 100 steuert. Die Schalteinheit 112 kann beispielsweise einfache Relais aufweisen. Genauso sind aber komplexere Schalteinheiten 112 möglich, die den Energiefluß mittels elektronisch umschaltbarer Schalter, beispielsweise Thyristoren, insbesondere GTOS, steuern.

Über ein gegebenenfalls vorhandenes Getriebe 103 wird die Antriebsleistung des elektrischen Antriebs 101 an das Fahrzeug abgegeben. Im gezeigten Beispiel ist nur eine Achse angetrieben, insbesondere die Vorderachse 110b. Auch ein beidachsiger Antrieb bzw. Allradantrieb ist jedoch möglich. Batterie 102, Motor 101 und gegebenenfalls vorhandenes Getriebe 103 weisen Sensoren 104, 105, 106 auf, die Betriebszustände der einzelnen Komponenten der Steuerung 100 mitteilen.

Die Steuerung 100 hat verschiedene Aufgaben, von denen nur die hier wesentlichen beschrieben werden. Sie beeinflußt den Energiefluß zwischen Energiespeicher/Batterie 102 und Motor 101, um entweder das gewünschte Antriebsmoment oder das gewünschte Bremsmoment bereitzustellen. Dazu kann die Steuerung 100 den Schaltblock 112 in geeigneter Weise ansprechen. Insofern dient die Steuerung 100 auch der Steuerung der elektrisch-regenerativen Bremse. Die Steuerung kann darüber hinaus in Fig. 1 nicht gezeigte Signale empfangen, die sie für ihre Datenverarbeitung benötigt. Insbesondere kann sie an einen fahrzeuginternen Bus angeschlossen sein, von dem sie die benötigten Daten erhält. Die Steuerung 100 kann außerdem eine Schnittstellenfunktion hin zur Steuerung 111 für die Reibbremse haben. In diesem Zusammenhang wird jedoch darauf hingewiesen, daß die Steuerung/Regelung 100 für die elektrisch-regenerative Bremse hardwareseitig nicht getrennt von der Steuerung/Regelung 111 für die Reibbremse vorgesehen sein muß. Zwar wird dies häufig der Fall sein. Ein gemeinsamer Aufbau der beiden Steuerungen/Regelungen 100, 111 ist aber ebenso möglich.

Fig. 2 zeigt eine erste Ausführungsform zur Ermittlung von Sollwerten. Einrichtung 203 ist eine Einrichtung zum Ermitteln einer Soll-Fahrzeugverzögerung a_{Soll} aus einem Verzögerungswunsch. In Fig. 2 ist der Fall gezeigt, daß der Verzögerungswunsch von einem Bremspedalsensor 202 aus der Betätigung des Bremspedals 201 abgeleitet wird. Wie oben erwähnt, kann der Verzögerungswunsch aber auch fahrzeugintern durch andere Steuerungs- bzw. Regelungskomponenten erzeugt werden. Wie ebenfalls schon erwähnt, kann der Verzögerungswunsch einerseits eine gewünschte Fahrzeugverzögerung und andererseits auch einen die Dynamik des Verzögerungswunsches angebenden Wert umfassen. Nach Maßgabe des Verzögerungswunsches wird die Soll-Fahrzeugverzögerung a_{Soll} in der Ermittlungseinrichtung 203 ermittelt und für die Ermittlung von Sollwerten für Bremsmomente (zu denen Bremskräfte für den Fachmann äquivalent sind) verwendet.

In einer bevorzugten Ausführungsform werden mindestens drei verschiedene Sollwerte (für Bremsmomente) erzeugt, nämlich ein Sollwert M_{Reg} für die elektrisch-regenerative Bremse, ein Sollwert M_{Reib,VA} für die Reibbremse an der Vorderachse des Fahrzeugs und ein Sollwert M_{Reib,HA} für die Hinterachse des Fahrzeugs. Anstelle der achsweise erzeugten Sollwerte können aber auch radweise Sollwerte erzeugt werden; dann wären zusammen mit dem Sollwert M_{Reg} für die elektrisch-regenerative Reibbremse fünf Sollwerte zu erzeugen.

Die Sollwerterzeugung wird in der Einrichtung 204, 205 vorgenommen. Die Einrichtung 204 empfängt zum einen die Soll-Fahrzeugverzögerung, und zum anderen verschiedene weitere Signale. Beispielsweise können die Signale der Sensoren 104 - 106 in Fig. 1 empfangen werden, die Signale weiterer, nicht näher spezifizierter Sensoren 207, die Signale der Radsensoren 108a - 108d in Fig. 1 sowie Signale aus einer Schnittstelle 209 zu einem Datenbus im Fahrzeug. Daneben kann die Einrichtung 204 ein Signal betreffend die Dynamik des Verzögerungswunsches empfangen. Dies ist durch Leitung 210 angedeutet.

Nach Maßgabe des Verzögerungswunsches ermittelt die Einrichtung 204, 205 die genannten Sollwerte anhand veränderlicher Kriterien bzw. Strategien. Welches Kriterium bzw. welche Strategie herangezogen wird, wird anhand des Verzögerungswunsches (gewünschte Verzögerung, Dynamik) und insbesondere anhand der Soll-Fahrzeugverzögerung entschieden. Hierzu kann eine Unterscheidungseinrichtung 206 vorgesehen sein, die ein Signal ausgibt, das für die eigentliche Ermittlungseinrichtung 205 angibt, welches Kriterium heranzuziehen bzw. welche Strategie zu befolgen ist.

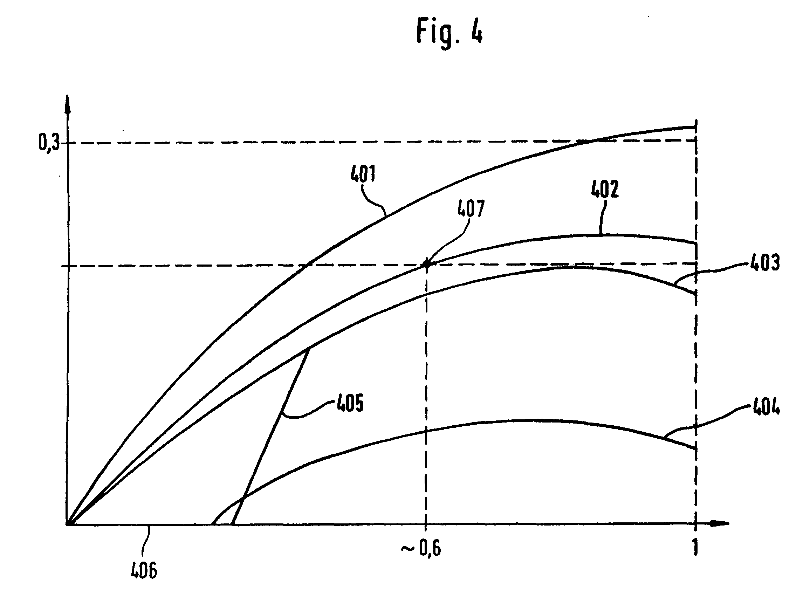

Eine Strategie ist es, die gewünschte Soll-Fahrzeugverzögerung lediglich durch Betätigen der elektrisch-regenerativen Bremse herbeizuführen. Dies kann bei vergleichsweise niedrigen Soll-Fahrzeugverzögerungen bzw. dementsprechenden Verzögerungswünschen erfolgen. Dann wird ein der gewünschten Soll-Fahrzeugverzögerung entsprechender Sollwert (für das Bremsmoment) lediglich für die elektrisch-regenerative Bremse erzeugt (also M_{Reg}), während für die Reibbremse keine Sollwerte bzw. Sollwerte von Null erzeugt werden (M_{Reib,VA}, M_{Reib,HA}). Eine andere Strategie ist es, die Bremskräfte zwischen Vorder- und Hinterachse nach Maßgabe weiterer, später anhand von Fig. 4 zu beschreibender, Kriterien zu verteilen. Dann werden ein Sollwert M_{Reg} für die elektrisch-regenerative Bremse sowie Sollwerte M_{Reib,VA}, M_{Reib,HA} für die Reibbremse nach Maßgabe weiterer Kriterien erzeugt. Diese Strategie eignet sich für höhere Soll-Fahrzeugverzögerungen bzw. dementsprechende Verzögerungswünsche.

Wenn Sollwerte einerseits für die elektrisch-regenerative Bremse und andererseits für die Reibbremse erzeugt werden, kann beispielsweise so verfahren werden, daß zunächst unabhängig von Reibbremse und elektrisch-regenerativer Bremse Sollwerte für die einzelnen Achsen erzeugt werden und dann die Sollwerte für diejenige Achse, an der beide Bremsen wirken, zwischen elektrisch-regenerativer Bremse und Reibbremse aufgeteilt werden. Bei dieser Aufteilung kann gegebenenfalls eine Maximierungsstrategie für das Bremsmoment der elektrisch-regenerativen Bremse verfolgt werden.

Anhand von Fig. 4 werden Überlegungen hinsichtlich der Bremskraftverteilung zwischen den verschiedenen Fahrzeugachsen erläutert. Fig. 4 zeigt als Abszisse eine normierte Bremskraft an der Vorderachse und als Ordinate eine normierte Bremskraft an der Hinterachse. Kurve 402 zeigt eine im Hinblick auf die Reibwertausnutzung zwischen Reifen und Straße optimierte Verteilungskurve. Am beispielhaft herausgegriffenen Punkt 407 hat die normierte Bremskraft an der Vorderachse einen Wert von etwa 0,6 und an der Hinterachse einen Wert von 0,2. Die Verteilung, die durch die Kurve beispielhaft gegeben ist, ergibt sich anhand dem Kriterium, daß die gleiche Reibwertausnutzung zwischen Rädern an der Vorderachse und der Hinterachse erreicht wird.

403 zeigt eine Kurve, bei der die Bremsmomentverteilung zwischen Hinterachse und Vorderachse so modifiziert ist, daß die Werte an der Hinterachse im Vergleich zur optimalen Verteilung abgesenkt sind. Dadurch wird sichergestellt, daß die Hinterachse (gleiche Reibwerte an allen Rädern vorausgesetzt) nicht vor bzw. erst nach der Vorderachse blockiert. Dadurch ergibt sich eine hinsichtlich der Fahrzeugverzögerung fast optimale, aber hinsichtlich der Fahrstabilität deutlich verbesserte Bremscharakteristik. Die Absenkung der Kurve 403 gegenüber der Kurve 402 kann beispielsweise so erfolgen, daß die Werte für die Hinterachse um einen bestimmten Anteil reduziert werden, beispielsweise um 20 % oder weniger, 10 % oder weniger oder 5 % oder weniger.

Kurve 401 zeigt eine modifizierte Verteilung, die beispielsweise bei einem beladenen Fahrzeug gewählt wird (wenn auch auf der hinteren Achse eine höhere Last aufliegt).

Wenn im Fahrzeug der Fig. 1 lediglich mit der elektrisch-regenerativen Bremse gebremst würde, ergibt sich eine Bremskraftverteilung gemäß Linie 406 in Fig. 4, wenn der elektrische Antrieb auf die Vorderachse einwirkt. Das Bremsmoment an der Vorderachse hat dann einen bestimmten Wert, während es an der Hinterachse Null ist. Eine insgesamt günstige Bremskennlinie, die durch das in Fig. 1 gezeigte System anhand zu erzeugender Sollwerte eingestellt werden kann, wäre beispielsweise eine Führung längs der Linienzüge 406 bei schwachen Bremsungen, 405 bei mittleren Bremsungen und 403 bei stärkeren Bremsungen. Die Linienzüge 406 im linken Teil der Fig. 4 und 403 im rechten Teil der Figur entsprechen dabei den schon vorher genannten Bereichen der Soll-Fahrzeugverzögerung. Zusätzlich ist ein zwischen diesen liegender Bereich vorgesehen, in dem von der einen Bremsstrategie auf die andere Bremsstrategie übergegangen wird, beispielsweise durch Interpolation, Mittelwertbildung oder ähnliches.

Wenn beispielsweise anhand der Fig. 4 Sollwerte für Bremsmomente für die einzelnen Fahrzeugachsen ermittelt werden, können nach deren Maßgabe in der Einrichtung 205 die Sollwerte M_{Reg}, M_{Reib,VA}, M_{Reib,HA} erzeugt werden. Damit ist in der Einrichtung 205 beispielsweise ein Kennlinienfeld gemäß Fig. 4 implementiert. Die Implementierung kann über Tabellen, Formeln oder ähnliches erfolgen.

Es kann Fahr- bzw. Betriebszustände geben, in denen es wünschenswert ist, die weiter oben genannte bereichsweise Aufteilung der Bremsstrategien nicht starr (beispielsweise nach Maßgabe eines starren Schwellenwerts) vorzunehmen, sondern an bestimmte Betriebsbedingungen anzupassen. Beispiele für solche Betriebsbedingungen sind:
- Die Soll-Fahrzeugverzögerung selbst ist zwar (noch) klein, aber sie nimmt schnell zu, die Soll-Fahrzeugverzögerung hat eine hohe Dynamik, was eine plötzliche Bremsung anzeigen kann. Wünschenswert ist es dann, daß die Bremse augenblicklich verzögerungsoptimiert betrieben wird und nicht erst dann, wenn die Soll-Fahrzeugverzögerung einen bestimmten Wert erreicht hat. Somit kann es wünschenswert sein, nach Maßgabe des Verzögerungswunsches und insbesondere dessen Dynamik früher zwischen den verschiedenen Bremsstrategien umzuschalten. Dies kann beispielsweise dadurch geschehen, daß der Schwellenwert in der Unterscheidungseinrichtung 206 nach Maßgabe der Dynamik des Verzögerungswunsches verändert und insbesondere abgesenkt wird, wenn eine hohe Dynamik des Verzögerungswunsches erkennbar wird. Dann wird früh verzögerungsoptimiert gebremst, und es gehen nicht wertvolle Zeiten zur Abbremsung des Fahrzeugs verloren.
- Trotz schwacher Bremsung ausschließlich mit der elektrisch-regenerativen Bremse kann es, beispielsweise bei Glatteis, plötzlich zu hohem Schlupf oder blockierenden Rädern kommen. Auch dann ist - trotz der vergleichsweise niedrigen Verzögerung - ein Umschalten auf eine Bremsung an allen Achsen (Hinzunahme der Reibbremse) wünschenswert. Auch dies kann geschehen, indem beispielsweise die Unterscheidungseinrichtung 206 nach Maßgabe von Schlupfinformationen (beispielsweise ermittelt anhand der Signale aus den Radsensoren 108a - 108d) einen zur Unterscheidung der Bremsstrategien herangezogenen Schwellenwert verändert.
- Die Wirksamkeit der elektrisch-regenerativen Bremse hängt davon ab, daß die im invertiert betriebenen Motor erzeugte Energie auch abgegeben werden kann, also letztendlich in der Batterie ihre Aufnahme findet. Wenn jedoch die Batterie voll geladen ist, kann die Energie nicht abgegeben werden, so daß die elektrisch-regenerative Bremse weniger wirksam bleibt. Somit kann es auch nach Maßgabe des Ladezustands der Batterie wünschenswert sein, die Verwendung der elektrisch-regenerativen Bremse zu unterbinden und stattdessen die Reibbremse zu verwenden. Auch dies kann wieder durch geeignete Modifikation der Unterscheidungskriterien (nach Maßgabe des Ladezustands der Batterie) für die verschiedenen Bremskriterien bzw. -strategien erfolgen.
- Entsprechend dem schon eingangs genannten Zusammenhang zwischen Moment M, Drehzahl ω und Leistung P (P = M · ω) ist die elektrisch-regenerative Bremse bei hohen Drehzahlen vergleichsweise schwach. Somit kann es auch bei hohen Motordrehzahlen wünschenswert sein, die Reibbremse gegenüber der elektrisch-regenerativen Bremse zu bevorzugen, was abermals durch eine entsprechende Umschaltung bzw. Veränderung des Schwellenwerts in der Unterscheidungseinrichtung 206 erfolgen kann.
- Schließlich kann es auch bei sehr niedrigen Fahrzeuggeschwindigkeiten (Fahrzeuggeschwindigkeit nahe Null) wünschenswert sein, anstelle der elektrisch-regenerativen Bremse die Reibbremse zu verwenden, da aus technischen Gründen bei niedrigen Fahrzeuggeschwindigkeiten die elektrisch-regenerative Bremse nur schwach wirkt. Auch dann kann eine Hinzunahme bzw. die ausschließliche Verwendung der Reibbremse wünschenswert sein, so daß dann durch eine geeignete Veränderung der Entscheidungskriterien in der Unterscheidungseinrichtung 206 die verzögerungsoptimierte Bremsstrategie verwendet wird.

Somit liegt ein Aspekt der Erfindung darin, nach Maßgabe von Betriebsbedingungen zwischen einer hinsichtlich der Regeneration elektrischer Energie optimierten Bremsstrategie und einer hinsichtlich der Verzögerungswirkung optimierten Bremsstrategie umzuschalten. Die hinsichtlich der Verzögerungswirkung optimierte Bremsstrategie kann die alleinige Benutzung der Reibbremse oder eine soweit unter dem Blickwinkel der Optimierung der Verzögerungswirkung möglich optimierte Verwendung der elektrisch-regenerativen Bremse umfassen. Die Verwendung der einzelnen Strategien wird nach Maßgabe der Unterscheidungseinrichtung 206 vorgenommen, wobei die Unterscheidungseinrichtung 206 ihrerseits nach Maßgabe der zu berücksichtigenden Betriebszustände in ihrer Arbeitsweise modifiziert werden kann. Beispielsweise kann ein Schwellenwert, der zur Unterscheidung dient, in der Unterscheidungseinrichtung 206 nach Maßgabe der zu berücksichtigenden Betriebsbedingungen geändert werden. Dies kann beispielsweise durch die Veränderungseinrichtung 208 geschehen.

Genauso wie verschiedene Betriebszustände im Fahrzeug, beispielsweise Drehzahl des elektrischen Antriebs 101, Ladezustand der Batterie 102 oder Schlupf der Räder, zur Verschiebung der Abgrenzung zwischen den unterschiedlichen Bremsstrategien (wiedergewinnungsoptimiert, verzögerungsoptimiert) verwendet werden können, können sie innerhalb einer Bremsstrategie zur Beeinflussung der Ermittlung des Sollwerts für die elektrisch-regenerative Bremse herangezogen werden. Wenn beispielsweise innerhalb der verzögerungsoptimierten Bremsstrategie auch ein Sollwert für die elektrisch-regenerative Bremse zu ermitteln ist, kann dieser beispielsweise dann klein gehalten werden, wenn der Ladezustand der Batterie sehr gut ist, die Motordrehzahl sehr hoch oder der Schlupf bestimmter Räder vergleichsweise hoch ist.

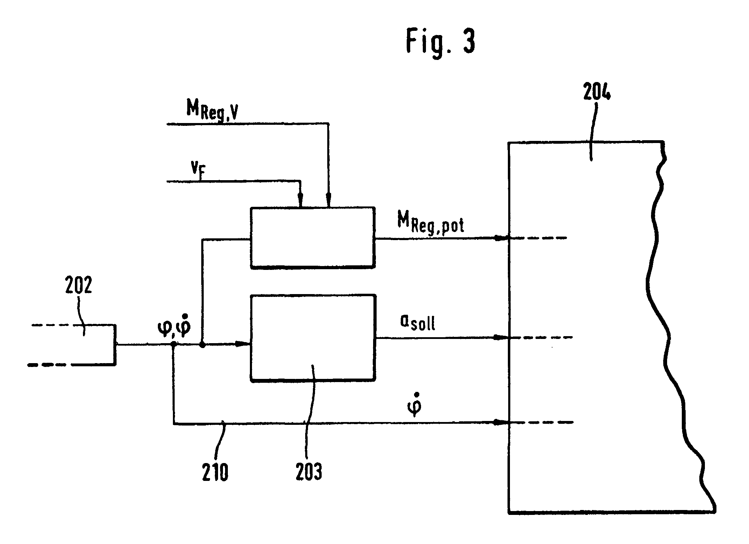

Bezugnehmend auf Fig. 3 wird eine Variante der Ausführungsform nach Fig. 2 erläutert. Es handelt sich im wesentlichen um eine Ergänzung der Ausführungsform in Fig. 2. Bei der Ausführungsform nach Fig. 3 wird die Berechnung des Sollwerts für die elektrisch-regenerative Bremse M_{Reg} in verschiedene Stufen aufgegliedert. Zunächst wird das verfügbare Moment M_{Reg,V} der elektrisch-regenerativen Bremse ermittelt. Daraus sowie aus der Fahrzeuggeschwindigkeit V_{F} und dem Verzögerungswunsch wird das potentielle Bremsmoment der elektrisch-regenerativen Bremse M_{Reg,pot} bestimmt, aus dem zusammen mit sonstigen Werten die oben angesprochenen Sollwerte ermittelt werden.

Die oben anhand der Fig. 2, 3 und 4 beschriebenen Ausführungsformen können als statische Sollwertermittlung angesehen werden, weil sie zwar die verschiedenen fahrzeuginternen und ebenfalls auch -externen Betriebszustände bei der Sollwertermittlung berücksichtigen, aber die Dynamik der dann mit den ermittelten Sollwerten anzusprechenden Bremsen außeracht lassen. Da es sich aber herausgestellt hat, daß insbesondere die elektrisch-regenerative Bremse dynamisch langsamer auf die vorgegebenen Sollwerte anspricht als die Reibbremse, kann eine weitere Verbesserung erreicht werden, wenn ermittelte Sollwerte, die beispielsweise wie oben ermittelt wurden, unter Berücksichtigung dynamischer Eigenschaften der anzusprechenden Bremsen modifiziert werden. Vorzugsweise wird dann, wenn es eine "schnell reagierende" und eine "langsam reagierende" Bremse gibt, der Sollwert der schnell reagierenden Bremse so modifiziert, daß er die zeitweise vorliegende Differenz zwischen Soll- und Istwert der langsam reagierenden Bremse mitübernimmt. Im konkret beschriebenen System wäre ein Sollwert für die Reibbremse nach Maßgabe des dynamischen Verhaltens der elektrisch-regenerativen Bremse zu korrigieren.

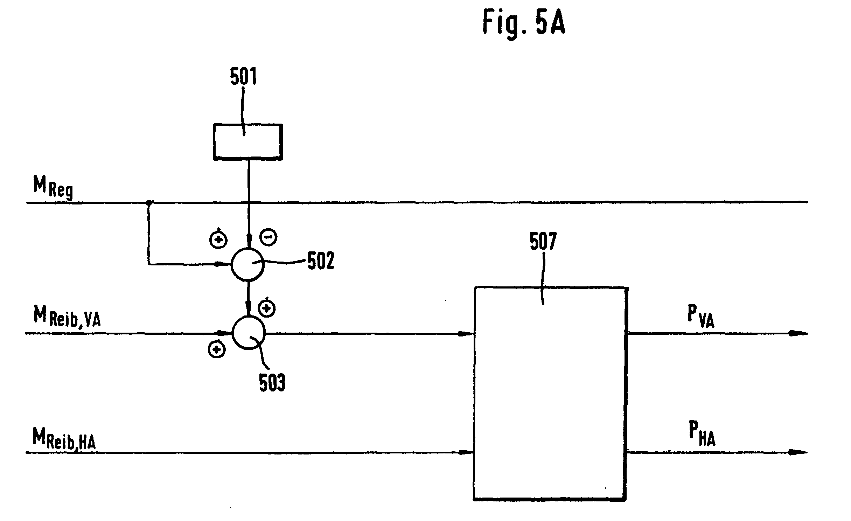

Fig. 5A zeigt schematisch eine erste Ausführungsform, mit der dies erreicht werden kann. Die Ausführungsform empfängt einen Sollwert M_{Reg} für die elektrisch-regenerative Bremse sowie mindestens zwei Sollwerte M_{Reib,VA}, M_{Reib,HA} für Vorder- und Hinterachse der Reibbremse. Außerdem ist eine Einrichtung 501 vorgesehen, mit der das tatsächlich momentan herrschende Bremsmoment der elektrisch-regenerativen Bremse ermittelt wird. Es kann sich um einen Sensor handeln oder um eine komplexere Datenverarbeitung, die anhand anderer Werte das besagte Moment ermittelt. In der Einrichtung 502 wird die Differenz zwischen Soll- und Istwert gebildet. Die Differenz wird einem geeigneten Sollwert für die Reibbremse zugeschlagen. Vorzugsweise wird sie dem Sollwert für diejenige Achse zugeschlagen, an der die elektrisch-regenerative Bremse angreift. Dieser Zuschlag erfolgt im Addierer 503. In der Einrichtung 507 werden die Radbremsdrücke für die einzelnen Reibbremsen ermittelt; diese werden dann geeignet angesteuert. Fig. 5A zeigt demnach einen regelungstechnischen Ansatz insofern, als hinsichtlich der elektrisch-regenerativen Bremse die Differenz zwischen Sollwert und Istwert ermittelt wird und diese Differenz zur Korrektur eines anderen Sollwerts verwendet wird.

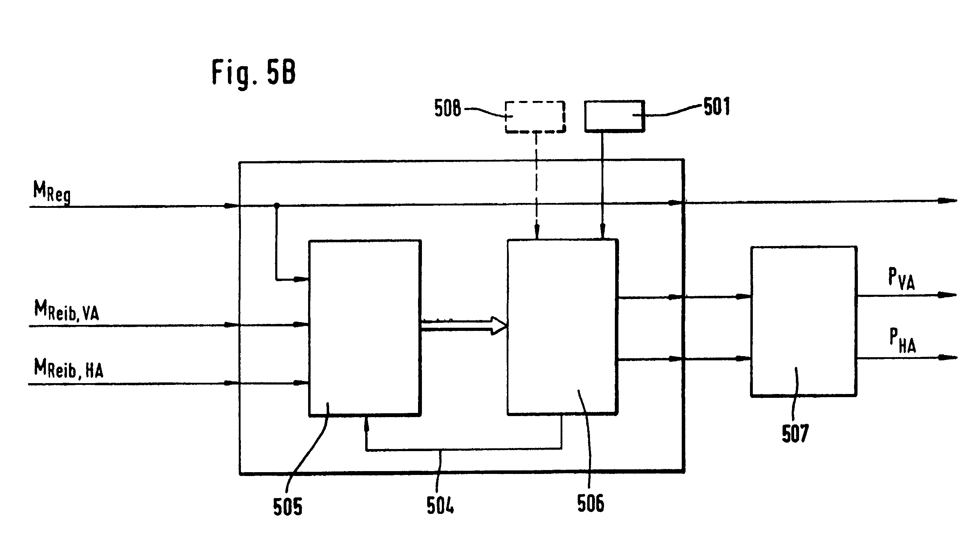

Fig. 5B zeigt einen anderen Ansatz. Hier werden ebenfalls die genannten Sollwerte anfänglich empfangen. Sie können, wie bezugnehmend auf die Fig. 2, 3 und 4 beschrieben, ermittelt worden sein. In der Ausführungsform der Fig. 5B wird allerdings das dynamische Verhalten der langsameren Bremse, in der beschriebenen Ausführungsform also der elektrisch-regenerativen Bremse, simuliert, und nach Maßgabe der Simulation werden die Sollwerte für die schnellere Bremse, also für die Reibbremse, modifiziert.

Die Simulation kann beispielsweise darin bestehen, daß der Sollwert für die elektrisch-regenerative Bremse M_{Reg} über ein geeignetes DT₁-Glied geleitet wird und die Ausgabe dieses Gliedes einem Sollwert für die Reibbremse zugeschlagen wird. In Fig. 5B ist eine Ausführungsform gezeigt, in der allgemein in der Einrichtung 504 die Simulation und die Beeinflussung der Sollwerte für die Reibbremse erfolgt, wobei die Sollwerte dann, wie schon in Fig. 5A, in der Einrichtung 507 zur Berechnung der Radbremsdrücke verwendet werden. Innerhalb der Einrichtung 504 gibt es eine Einrichtung 505, die anhand von bestimmten Parametern die Bremsendynamik der elektrisch-regenerativen Bremse und bei verfeinerten Systemen auch der Reibbremse simuliert. In der Einrichtung 506 werden die dynamischen Sollwerte für die Reibbremse bestimmt. Außerdem werden Trimmparameter ermittelt, mit denen das Bremsenmodell in der Einrichtung 505 eingestellt werden kann. Hierzu empfängt die Einrichtung 506 ebenfalls Signale, die zumindest das tatsächliche dynamische Verhalten der elektrisch-regenerativen Bremse wiederspiegeln. Wenn auch die Dynamik der Reibbremse zu berücksichtigen ist, sind auch Einrichtungen 308 vorzusehen, die das tatsächliche dynamische Verhalten der Reibbremse ermitteln und der Einrichtung 506 mitteilen.

Die bezugnehmend auf die Fig. 2, 3, 5A und 5B beschriebenen Ausführungsformen können auf die in Fig. 1 gezeigten Steuerungen 100, 111 verteilt sein. Genauso können sie aber auch in einem einzigen Gerät implementiert werden, auf einer einzigen Platine oder durch einen einzigen Chip, der geeignet programmiert ist.

## Patentansprüche

1. Verfahren zum Ermitteln von Sollwerten für Bremskräfte der -momente einer Bremsanlage eines Fahrzeugs, das elektrisch angetrieben werden kann, wobei die Bremskräfte oder -momente nach Maßgabe von entsprechenden Sollwerten durch eine auf alle Räder eines Fahrzeugs einwirkende Reibbremse und eine auf zumindest eine Achse einwirkende elektrisch-regenerative Bremse erzeugt werden können, mit den Schritten
- Ermitteln einer Soll-Fahrzeugverzögerung aus einem ermittelten Verzögerungswunsch, und
- Ermitteln der Bremskraft-Sollwerte nach Maßgabe der Soll-Fahrzeugverzögerung,
**dadurch gekennzeichnet, daß,**
in einem ersten Bereich der Soll-Fahrzeugverzögerung der Sollwert für die elektrisch-regenerative Bremse größtmöglich gemacht wird, und in einem zweiten Bereich der Soll-Fahrzeugverzögerung, der dem ersten Bereich Folgt, die Sollwerte für die elektrisch-regenerative Bremse und für die Reibbremse primär nach Maßgabe der Kriterien betreffend die Bremskraftverteilung eingestellt werden.

2. Verfahren nach Anspruch 1, **dadurch gekenzeichnet, daß** im zweiten Bereich die Sollwerte für die elektrisch-regenerative Bremse und für die Reibbremse so vorgegeben werden, daß die Verteilung der Bremskräfte oder -momente auf die verschiedenen Fahrzeugachsen einer für die Reibwertausnutzung zwischen Reifen und Straße günstigen Soll-Verteilung zwischen Vorder- und Hinterachse entspricht.

3. Verfahren nach Anspruch 2, **dadurch gekennzeichnet, daß** die Soll-Verteilung von der Beladung des Fahrzeugs abhängt.

4. Verfahren nach Anspruch 2 oder 3, **dadurch gekennzeichnet, daß** die Soll-Verteilung so gewählt ist, daß an der Hinterachse ein Blockieren erst nach dem Blockieren der Vorderachse einsetzt.

5. Verfahren nach einem der vorherigen Ansprüche, **dadurch gekennzeichnet, daß** der Sollwert für die elektrisch-regenerative Bremse nach Maßgabe eines Betriebszustandes, insbesondere der Drehzahl, des elektrischen Antriebsmotors und/oder nach Maßgabe des Ladezustands der Batterie vorgegeben wird.

6. Verfahren nach einem der vorherigen Ansprüche, **dadurch gekennzeichnet, daß** die Reibbremsen der einzelnen Räder individuell nach Maßgabe elektrischer Signale gesteuert werden, die nach Maßgabe der Sollwerte erzeugt werden.

7. Verfahren nach einem der vorherigen Ansprüche, **dadurch gekennzeichnet, daß** die Soll-Fahrzeugverzögerung nach Maßgabe des Betätigungsgrades des Bremspedals sowie nach Maßgabe der Dynamik der Bremspedalbetätigung ermittelt wird.

8. Verfahren nach einem der vorherigen Ansprüche, **dadurch gekennzeichnet, daß** die Sollwerte nach Maßgabe von Schlupfinformationen an den einzelnen Rädern modifiziert werden.

9. Verfahren nach einem der vorherigen Ansprüche, **dadurch gekennzeichnet, daß** die elektrisch-regenerative Bremse auf die Vorderachse einwirkt.

10. verfahren nach einem der Ansprüche 1 bis 9, **dadurch gekennzeichnet, daß** die Abgrenzung zwischen erstem und zweitem Bereich der Soll-Fahrzeugverzögerung nach Maßgabe der Dynamik des Verzögerungswunsches geändert wird.

11. Verfahren nach einem der Ansprüche 1 bis 10, **dadurch gekennzeichnet, daß** die Abgrenzung zwischen erstem und zweitem Bereich der Soll-Fahrzeugverzögerung nach Maßgabe von Schlupfinformationen zumindest eines Rades geändert wird.

12. Verfahren nach einem der Ansprüche 1 bis 11, **dadurch gekennzeichnet, daß** die Abgrenzung zwischen erstem und zweitem Bereich der Soll-Fahrzeugverzögerung nach Maßgabe eines Betriebszustandes, insbesondere der Drehzahl des elektrischen Antriebsmotors und/oder nach Maßgabe des Ladezustands der Batterie geändert wird.

13. Verfahren nach einem der Ansprüche 1 bis 12, **dadurch gekennzeichnet, daß** die Abgrenzung zwischen erstem und zweitem Bereich der Soll-Fahrzeugverzögerung nach Maßgabe eines einstelbaren Schwellenwertes erfolgt.

14. Verfahren nach einem der Ansprüche 1 bis 12, **dadurch gekennzeichnet, daß** der Sollwert für die Reibbremse, vorzugsweise für die Vorderachse nach Maßgabe des dynamischen Verhaltens der elektrisch-regenerativen Bremse korrigiert wird.

15. Verfahren nach Anspruch 14, bei dem das dynamische Verhalten der elektrisch-regenerativen Bremse fortlaufend, insbesondere durch Sensoren ermittelt wird und die Korrektur des Sollwerts für die Reibbremse nach Maßgabe des Ergebnisses der Ermittlung erfolgt.

16. Verfahren nach Anspruch 14, bei dem das dynamische Verhalten der elektrisch-regenerativen Bremse fortlaufend simuliert wird und die Korrektur des Sollwerts für die Reibbremse nach Maßgabe des Ergebnisses der Simulation erfolgt.

17. Verfahren nach Anspruch 16, **dadurch gekennzeichnet, daß** die Simulation anhand von Kennfeldern und/oder Formeln erfolgt.

18. Vorrichtung zum Ermitteln von Sollwerten für Bremskräfte oder -momente einer Bremsanlage eines Fahrzeugs, das einen elektrischen Antrieb (101), eine nach Maßgabe von entsprechenden Sollwerten auf alle Räder (109) eines Fahrzeugs Bremskräfte aufbringende Reibbremse (107) und eine nach Maßgabe von entsprechenden Sollwerten auf zumindest eine Achse (110b) Bremskräfte aufbringende elektrisch-regenerative Bremse (101, 102, 105) aufweist, mit:
- einer Einrichtung (203) zum Ermitteln einer Soll-Fahrzeugverzögerung aus einem ermittelten Verzögerungswunsch, und
- einer Einrichtung (204, 205) zum Ermitteln der Bremskraft-Sollwerte nach Maßgabe der Soll-Fahrzeugverzögerung,
**dadurch gekennzeichnet, daß**
die Einrichtung (204, 205) zum Ermitteln der Sollwerte nach Maßgabe des Verzögerungswunsches die Sollwerte für die elektrisch-regenerative Bremse und für die Reibbremse einstellt, wobei eine Unterscheidungseinrichtung (206) vorgesehen ist, die einen ersten Bereich der Soll-Fahrzeugverzögerung und einen zweiten Bereich der Soll-Fahrzeugverzögerung, der dem ersten Bereich Folgt, voneinander unterscheidet, wobei die Einrichtung zum Ermitteln der Sollwerte den Sollwert für die elektrisch-regenerative Bremse im ersten Bereich größtmöglich macht und die Sollwerte für die elektrisch-regenerative Bremse und für die Reibbremse im zweiten Bereich primär nach Maßgabe der Kriterien betreffend die Bremskraftverteilung einstellt.

19. Vorrichtung nach Anspruch 18, **dadurch gekenzeichnet, daß** die Einrichtung zum Ermitteln der Sollwerte im zweiten Bereich die Sollwerte für die elektrisch-regenerative Bremse und für die Reibbremse so vorgibt, daß die Verteilung der Bremskräfte oder -momente auf die verschiedenen Fahrzeugachsen (110a, b) einer für die Reibwertausnutzung zwischen Straße und Reifen günstigen Soll-Verteilung zwischen Vorder- und Hinterachse entspricht.

20. Vorrichtung nach Anspruch 19, **dadurch gekennzeichnet, daß** die Soll-Verteilung von der Beladung des Fahrzeugs abhängt.

21. Vorrichtung nach Anspruch 19 oder 20, **dadurch gekennzeichnet, daß** die Soll-Verteilung so gewählt ist, daß an der Hinterachse (110a) ein Blockieren erst nach dem Blockieren der Vorderachse (110b) einsetzt.

22. Vorrichtung nach einem der vorherigen Ansprüche, **dadurch gekennzeichnet, daß** eine Erfassungseinrichtung (104, 105) zum Erfassen eines Betriebszustandes, insbesondere der Drehzahl, des elektrischen Antriebsmotors (101) und/oder des Ladezustands der Batterie (102) vorgesehen ist und daß die Einrichtung zum Ermitteln der Sollwerte den Sollwert für die elektrisch-regenerative Bremse nach Maßgabe eines erfaßten Wertes vorgibt.

23. Vorrichtung nach einem der vorherigen Ansprüche, **gekennzeichnet durch** eine Steuerung bzw. Regelung (111), die für die Reibbremsen (107a-d) der einzelnen Räder(109a-d) individuelle elktrische Signale nach Maßgabe der Sollwerte erzeugt.

24. Vorrichtung nach einem der vorherigen Ansprüche, **gekennzeichnet durch** einen Bremspedalsensor (202), wobei die Soll-Fahrzeugverzögerung nach Maßgabe des Betätigungsgrades des Bremspedals sowie nach Maßgabe der Dynamik der Bremspedalbetätigung ermittelt wird.

25. Vorrichtung nach einem der vorherigen Ansprüche, **dadurch gekennzeichnet, daß** die Einrichtung zum Ermitteln der Sollwerte die Sollwerte nach Maßgabe von Schlupfinformationen an den einzelnen Rädern modifiziert.

26. Vorrichtung nach einem der vorherigen Ansprüche, **dadurch gekennzeichnet, daß** die elektrisch-regenerative Bremse (101, 105) auf die Vorderachse (110b) einwirkt.

27. Vorrichtung nach einem der Ansprüche 18 bis 26, **gekennzeichnet durch** eine Veränderungseinrichtung (208), die die Abgrenzung zwischen erstem und zweitem Bereich der Soll-Fahrzeugverzögerung nach Maßgabe der Dynamik des Verzögerungswunsches ändert.

28. Vorrichtung nach einem der Ansprüche 18 bis 27, **gekennzeichnet durch** eine Veränderungseinrichtung (208), die die Abgrenzung zwischen erstem und zweitem Bereich der Soll-Fahrzeugverzögerung nach Maßgabe von Schlupfinformationen zumindest eines Rades ändert.

29. Vorrichtung nach einem der Ansprüche 18 bis 28, **gekennzeichnet durch** eine Veränderungseinrichtung (208), die die Abgrenzung zwischen erstem und zweitem Bereich der Soll-Fahrzeugverzögerung nach Maßgabe eines Betriebszustandes, insbesondere der Drehzahl, des elektrischen Antriebsmotors und/oder nach maßgabe des Ladezustannds der Batterie ändert.

30. Vorrichtung nach einem der Ansprüche 18 bis 29, mit einer Einrichtung (501 - 506) zum Korrigieren eines Sollwerts für die Reibbremse, vorzugsweise an der Vorderachse (110b) nach Maßgabe des dynamischen Verhaltens der elektrisch-regenerativen Bremse (101, 105).

31. Vorrichtung nach Anspruch 30, mit einem Einrichtung (501) zum fortlaufenden Überwachen des Verhaltens der elektrisch-regenerativen Bremse, wobei die Korrektureinrichtung (502, 503) den Sollwert für die Reibbremse nach Maßgabe einer Ausgabe der Ermittlungseinrichtung korrigiert.

32. Vorrichtung nach Anspruch 30, mit einer Einrichtung (504 - 506) zum fortlaufenden Simulieren des dynamischen Verhaltens der elektrisch-regenerativen Bremse, wobei die Korrektureinrichtung den Sollwert für die Reibbremse nach Maßgabe einer Ausgabe der Simulationseinrichtung korrigiert.

33. Vorrichtung nach Anspruch 32, **dadurch gekennzeichnet, daß** die Simulationseinrichtung ein Kennfeld und/oder eine Einrichtung zum Berechnen von Formeln aufweist.

## Claims

1. A method for determining set values for braking forces or braking torques of a brake system of a vehicle that can be driven electrically, wherein the braking forces or braking torques can be generated by a friction brake acting on all wheels of a vehicle and an electro-regenerative brake acting on at least one axle according to corresponding set values and comprising the following steps:
- determining a nominal vehicle deceleration from a determined deceleration requirement, and
- determining the set brake force values according to the nominal vehicle deceleration;
**characterized in that**
the set value for the electro-regenerative brake is defined as large as possible in a first range of the nominal vehicle deceleration, and the set values for the electro-regenerative brake and for the friction brake are set primarily according to criteria concerning the distribution of braking forces in a second range of the nominal vehicle deceleration following the first range.

2. A method according to claim 1,
**characterized in that** the set values for the electro-regenerative brake and for the friction brake are specified in the second range in such a way that the distribution of the braking forces or braking torques on the different vehicle axles results in a distribution of the nominal forces/torques on the front and rear axles that is favourable as regards the friction value utilization between tires and road surface.

3. A method according to claim 2,
**characterized in that** the nominal distribution depends on the load of the vehicle.

4. A method according to claim 2 or 3,
**characterized in that** the nominal distribution is selected in such a way that the front axle has to block before the rear axle will block.

5. A method according to one of the preceding claims,
**characterized in that** the set value for the electro-regenerative brake is defined according to an operating state, in particular the rotational speed of the electric drive motor and/or according to the charge state of the battery.

6. A method according to one of the preceding claims,
**characterized in that** the friction brakes of the individual wheels are controlled individually in accordance with electric signals generated according to the set values.

7. A method according to one of the preceding claims,
**characterized in that** the nominal vehicle deceleration is determined according to the degree of actuation of the brake pedal as well as according to the dynamics of the brake pedal actuation.

8. A method according to one of the preceding claims,
**characterized in that** the set values are modified according to slip information at the individual wheels.

9. A method according to one of the preceding claims,
**characterized in that** the electro-regenerative brake acts on the front axle.

10. A method according to one of the claims 1 to 9,
**characterized in that** the delimitation between the first and second range of the nominal vehicle deceleration is changed according to the dynamics of the deceleration requirement.

11. A method according to one of the claims 1 to 10,
**characterized in that** the delimitation between the first and second range of the nominal vehicle deceleration is changed according to the slip information of at least one wheel.

12. A method according to one of the claims 1 to 11,
**characterized in that** the delimitation between the first and second range of the nominal vehicle deceleration is changed according to an operating state, in particular the rotational speed of the electric drive motor and/or according to the charge state of the battery.

13. A method according to one of the claims 1 to 12,
**characterized in that** the delimitation between the first and second range of the nominal vehicle deceleration is defined according to an adjustable threshold value.

14. A method according to one of the claims 1 to 12,
**characterized in that** the set value for the friction brake, preferably for the front axle, is corrected according to the dynamic behaviour of the electro-regenerative brake.

15. A method according to claim 14, wherein the dynamic behaviour of the electro-regenerative brake is determined continuously, in particular by means of sensors, and the set value for the friction brake is corrected according to the results of such determination.

16. A method according to claim 14, wherein the dynamic behaviour of the electro-regenerative brake is simulated continuously and the set value for the friction brake is corrected according to the results of such simulation.

17. A method according to claim 16,
**characterized in that** the simulation is based on characteristics fields and/or equations.

18. A device for determining set values for the braking forces or braking torques of the brake system of a vehicle comprising an electric drive (101), a friction brake (107) applying braking forces to all wheels (109) of a vehicle according to appropriate set values, and an electro-regenerative brake (101, 102, 105) applying braking forces to at least one axle (110b) according to appropriate set values, comprising:
- an element (203) for determining a nominal vehicle deceleration from a determined deceleration requirement, and
- an element (204, 205) for determining the set brake force values according to the nominal vehicle deceleration,
**characterized in that**
- the element (204, 205) for determining the set values adjusts the set values for the electro-regenerative brake and for the friction brake according to the deceleration requirement, and there is provision of a differentiating element (206) which differentiates between a first range of the nominal vehicle deceleration and a second range of the nominal vehicle deceleration which follows the first range, wherein the element for determining the set values makes the set value for the electro-regenerative brake as great as possible in the first range and adjusts the set values for the electro-regenerative brake and for the friction brake in the second range primarily according to the criteria concerning the distribution of the braking forces.

19. A device according to claim 18,
**characterized in that** the element for determining the set values in the second range specifies the set values for the electro-regenerative brake and for the friction brake in such a way that the distribution of the braking forces or braking torques onto the different vehicle axles (110a,b) results in a distribution of the nominal forces/torques onto the front and rear axles that is favourable as regards the friction value utilization between tires and road surface.

20. A device according to claim 19,
**characterized in that** the nominal distribution depends on the load of the vehicle.

21. A device according to claim 19 or 20,
**characterized in that** the nominal distribution is selected in such a way that the front axle (110b) has to block before the rear axle (110a) will block.

22. A device according to one of the preceding claims,
**characterized in that** a sensing element (104, 105) for sensing an operating state, in particular the rotational speed of the electric drive motor (101) and/or the charge state of the battery (102), is provided, and **in that** the element for determining the set values specifies the set value for the electro-regenerative brake according to a sensed value.

23. A device according to one of the preceding claims,
**characterized in that** it comprises a control or regulation system (111) that generates individual electric signals for the friction brakes (107a-d) of the individual wheels (109a-d) according to the set values.

24. A device according to one of the preceding claims,
**characterized by** a brake pedal sensor (202), and the nominal vehicle deceleration is determined according to the degree of actuation of the brake pedal as well as according to the dynamics of the brake pedal actuation.

25. A device according to one of the preceding claims,
**characterized in that** the element for determining the set values modifies the set values according to slip information at the individual wheels.

26. A device according to one of the preceding claims,
**characterized in that** the electro-regenerative brake (101, 105) acts on the front axle (110b).

27. A device according to one of the claims 18 to 26,
**characterized by** a changing element (208) that changes the delimitation between the first and second range of the nominal vehicle deceleration according to the dynamics of the deceleration requirement.

28. A device according to the one of the claims 18 to 27,
**characterized by** a changing element (208) that changes the delimitation between the first and second range of the nominal vehicle deceleration according to the slip information of at least one wheel.

29. A device according to one of the claims 18 to 28,
**characterized by** a changing element (208) that changes the delimitation between the first and second range of the nominal vehicle deceleration according to an operating state, in particular the rotational speed of the electric drive motor and/or according to the charge state of the battery.

30. A device according to one of the claims 18 to 29, comprising an element (501-506) for correcting a set value for the friction brake, preferably at the front axle (110b), according to the dynamic behaviour of the electro-regenerative brake (101, 105).

31. A device according to claim 30, comprising an element (501) for continuously monitoring the behaviour of the electro-regenerative brake, wherein the correction element (502, 503) corrects the set value for the friction brake according to an output of the determining element.

32. A device according to claim 30, comprising an element (504-506) for continuously simulating the dynamic behaviour of the electro-regenerative brake, wherein the correction element corrects the set value for the friction brake according to an output of the simulation element.

33. A device according to claim 32,
**characterized in that** the simulation element exhibits a characteristics field and/or an element for calculating equations.

## Revendications

1. Procédé pour déterminer des valeurs de consigne pour des forces ou des couples de freinage d'une installation de freinage d'un véhicule, qui peut être mû électriquement, les forces de freinage ou les couples de freinage pouvant être produits en fonction de valeurs de consigne correspondantes par un frein à friction agissant sur toutes les roues du véhicule et un frein électro-régénératif, qui agit sur au moins un essieu, comprenant les étapes de
- détermination d'une décélération de consigne du véhicule à partir d'un souhait de décélération déterminé, et
- détermination des valeurs de consigne de la force de freinage en fonction de la décélération de consigne du véhicule,
**caractérisé en ce que**
dans une première gamme de la décélération de consigne du véhicule, la valeur de consigne pour le frein électro-régénératif est amenée à avoir la valeur maximale possible, et dans une seconde gamme de décélération du véhicule, qui suit la première gamme, les valeurs de consigne pour le frein électro-régénératif et pour le frein à friction sont réglées de façon primaire en fonction des critères concernant la distribution de la force de freinage.

2. Procédé selon la revendication 1, **caractérisé en ce que** dans la seconde gamme, les valeurs de consigne pour le frein électro-régénératif et pour le frein de friction sont prédéterminées de telle sorte que la répartition des forces de freinage ou des couples de freinage entre les différents essieux du véhicule correspond à une répartition de consigne, favorable pour l'utilisation du coefficient de frottement entre les pneumatiques et la route, entre l'essieu avant et l'essieu arrière.

3. Procédé selon la revendication 2, **caractérisé en ce que** la répartition de consigne dépend de la charge du véhicule.

4. Procédé selon la revendication 2 ou 3, **caractérisé en ce que** la répartition de consigne est choisie de telle sorte que le blocage ne se produit au niveau de l'essieu arrière qu'après le blocage de l'essieu avant.

5. Procédé selon l'une des revendications précédentes, **caractérisé en ce que** la valeur de consigne pour le frein électro-régénératif est prédéterminée en fonction d'un état de fonctionnement, notamment de la vitesse de rotation, du moteur d'entraînement électrique et/eu fonction de l'état de charge de la batterie.

6. Procédé selon l'une des revendications précédentes, **caractérisé en ce que** les freins à friction des différentes roues sont commandés individuellement en fonction de signaux électriques, qui sont produits en fonction des valeurs de consigne.

7. Procédé selon l'une des revendications précédentes, **caractérisé en ce que** la décélération de consigne du véhicule est déterminée en fonction du degré d'actionnement de la pédale de frein ainsi qu'en fonction de la dynamique de l'actionnement de la pédale de frein.

8. Procédé selon l'une des revendications précédentes, **caractérisé en ce que** les valeurs de consigne sont modifiées en fonction d'informations de glissement au niveau des différentes roues.

9. Procédé selon l'une des revendications précédentes, **caractérisé en ce que** le frein électro-régénératif agit sur l'essieu avant.

10. Procédé selon l'une des revendications 1 à 9, **caractérisé en ce que** la limitation entre les première et seconde gammes de la décélération de consigne du véhicule est modifiée en fonction de la dynamique du souhait de décélération.

11. Procédé selon l'une des revendications 1 à 10, **caractérisé en ce que** la limitation entre les première et secondes gammes de la décélération de consigne du véhicule est modifiée en fonction d'informations de glissement d'au moins une roue.

12. Procédé selon l'une des revendications 1 à 11, **caractérisé en ce que** la limitation entre les première et seconde gammes de la décélération de consigne du véhicule est modifiée en fonction d'un état de fonctionnement, notamment de la vitesse de rotation du moteur d'entraînement électrique et/ou en fonction de l'état de charge de la batterie.

13. Procédé selon l'une des revendications 1 à 12, **caractérisé en ce que** la limitation entre les première et seconde gammes de la décélération de consigne du véhicule s'effectue en fonction d'une valeur de seuil réglable.

14. Procédé selon l'une des revendications 1 à 12, **caractérisé en ce que** la valeur de consigne pour le frein à friction est corrigée de manière privilégiée pour l'essieu avant en fonction du comportement dynamique du frein électro-régénératif.

15. Procédé selon l'une des revendications 14, selon lequel le comportement dynamique du frein électro-régénératif est déterminé en permanence, notamment par les capteurs, et la correction de la valeur de consigne pour le frein à friction s'effectue en fonction du résultat de la détermination.

16. Procédé selon la revendication 14, selon lequel le comportement dynamique du frein électro-régénératif est simulé de façon permanente et la correction de la valeur de consigne pour les freins à friction est exécutée en fonction du résultat de la simulation.

17. Procédé selon la revendication 16, **caractérisé en ce que** la simulation s'effectue sur la base de champs de caractéristiques et/ou de formules.

18. Dispositif pour la détermination de valeurs de consigne pour des forces de freinage ou des couples de freinage d'une installation de freinage d'un véhicule, qui comporte un dispositif d'entraînement électrique (101), un frein à friction (107) qui applique, en fonction de valeurs de consigne correspondantes, des forces de freinage à toutes les roues (109) d'un véhicule, et un frein électro-régénératif (101,102,105), qui, en fonction de valeurs d consigne correspondantes, applique des forces de freinage à au moins un essieu (110b), comportant :
- un dispositif (203) pour déterminer une décélération de consigne du véhicule à partir d'un souhait déterminé de décélération, et
- un dispositif (204,205) pour déterminer les valeurs de consigne de la force de freinage en fonction de la décélération de consigne du véhicule,
**caractérisé en ce que**
le dispositif (204,205) servant à déterminer les valeurs de consigne règle, en fonction du souhait de décélération, les valeurs de consigne pour le frein électro-régénératif et pour le frein à friction, et il est prévu un dispositif de différenciation (206), qui différencie l'une de l'autre une première gamme de la décélération de consigne du véhicule et une seconde gamme de la décélération de consigne du véhicule, qui suit la première gamme, le dispositif servant à déterminer les valeurs de consigne donnant une valeur aussi grande que possible à la valeur de consigne pour le frein électro-régénératif dans la première gamme et en réglant les valeurs de consigne pour le frein électro-régénératif et pour le frein à friction dans la seconde gamme principalement en fonction des critères concernant la répartition de la force de freinage.

19. Dispositif selon la revendication 18, **caractérisé en ce que** le dispositif de détermination des valeurs de consigne dans la seconde gamme prédétermine les valeurs de consigne pour le frein électro-régénératif et pour le frein à friction de telle sorte que la répartition des forces de freinage ou des couples de freinage entre les différents essieux (110a,b) du véhicule correspond à une répartition de consigne, appropriée pour l'utilisation des coefficients de friction entre la route et les pneumatiques, entre l'essieu avant et l'essieu arrière.

20. Dispositif selon la revendication 19, **caractérisé en ce que** la répartition de consigne dépend de la charge du véhicule.

21. Dispositif selon la revendication 19 ou 20, **caractérisé en ce que** la répartition de consigne est choisie de telle sorte que le blocage s'établit au niveau de l'essieu arrière (110a) uniquement après le blocage de l'essieu avant (110b).

22. Dispositif selon l'une des revendications précédentes, **caractérisé en ce qu'**il est prévu un dispositif de détection (104,105) servant à détecter un état de fonctionnement notamment de la vitesse de rotation, du moteur d'entraînement électrique (101) et/ou de l'état de charge de la batterie (102), et que le dispositif de détermination des valeurs de consigne prédétermine la valeur de consigne pour le frein électro-régénératif en fonction d'une valeur détectée.

23. Dispositif selon l'une des revendications précédentes, **caractérisé par** une commande ou une régulation (111), qui produit, pour les freins à friction (107a-d) des différentes roues (109a-d), les signaux électriques individuels en fonction des valeurs de consigne.

24. Dispositif selon l'une des revendications précédentes, **caractérisé par** un capteur (202) de la pédale de frein, la décélération de consigne du véhicule étant déterminée en fonction du degré d'actionnement de la pédale de frein ainsi qu'en fonction de la dynamique de l'actionnement de la pédale de frein.

25. Dispositif selon l'une des revendications précédentes, **caractérisé en ce que** le dispositif de détermination des valeurs de consigne modifie les valeurs de consigne en fonction d'informations de glissement au niveau des différentes roues.

26. Dispositif selon l'une des revendications précédentes, **caractérisé en ce que** le frein électro-régénératif (101;105) agit sur l'essieu avant (110b).

27. Dispositif selon l'une des revendications 18 à 26, **caractérisé par** un dispositif de modification (208), qui modifie la limite d'entrée des première et seconde gammes de la décélération de consigne du véhicule, en fonction de la dynamique du souhait de décélération.

28. Dispositif selon l'une des revendications 28 à 27, **caractérisé par** un dispositif de modification (208), qui modifie la limite entre les première et seconde gammes de la décélération de consigne du véhicule en fonction d'informations de glissement d'au moins une roue.

29. Dispositif selon l'une des revendications 18 à 28, **caractérisé par** un dispositif de modification (208), qui modifie la limite entre les première et seconde gammes de la décélération de consigne du véhicule en fonction d'un état de fonctionnement, notamment de la vitesse de rotation, du moteur d'entraînement électrique et/ou en fonction de l'état de charge de la batterie.

30. Dispositif selon l'une des revendications 18 à 29, comportant un dispositif (501-506) servant à corriger une valeur de consigne pour le frein à friction, de préférence au niveau de l'essieu avant (110b), en fonction du comportement dynamique du frein électro-régénératif (101, 105) .

31. Dispositif selon la revendication 30, comportant un dispositif (501) pour contrôler de façon permanente le comportement du frein électro-régénératif, le dispositif de correction (502, 503) corrigeant la valeur de consigne pour le frein à friction en fonction d'une sortie fournie par le dispositif de détermination.

32. Dispositif selon la revendication 30, comportant un dispositif (504 à 506) pour simuler de façon permanente le comportement dynamique du frein électro-régénératif, le dispositif de correction corrigeant la valeur de consigne pour le frein à friction en fonction d'une sortie fournie par le dispositif de simulation.

33. Dispositif selon la revendication 32, **caractérisé en ce que** le dispositif de simulation comporte un champ de caractéristiques et/ou un dispositif pour le calcul de formules.
